# EUROPÄISCHE PATENTANMELDUNG

(11) **EP 1 393 892 A1**
(43) Veröffentlichungstag der Anmeldung: **03.03.2004**
(21) Anmeldenummer: 02405739.0
(22) Anmeldetag: 29.08.2002
(51) Int. Cl.: B32B 3/18, B29D 9/00

(54) **Geschäumte Kunststoffplatte**

(71) Anmelder: Alcan Technology & Management Ltd., 8212 Neuhausen am Rheinfall (CH)
(72) Erfinder: Rakutt, Dietmar, 6330 Cham (CH); Berger, Lukas, 6005 Luzern (CH)

(57) **Zusammenfassung**

Die Erfindung betrifft eine sortenreine Kunststoffplatte (10) aus einem thermoplastischen Kunststoff, welche sich aus einer Mehrzahl von in einer Ebene nebeneinander angeordneten und gegenseitig gefügten Körpersegmenten (11) aus geschlossenzelligem Schaumstoff zusammensetzt. Die Körpersegmente (11) sind hierzu an ihren anstossenden Seitenflächen unter Ausbildung flächiger Schweissnähte (12, 13) gegenseitig thermoplastisch verschweisst, wobei die flächigen Schweissnähte (12, 13) eine porenarme Kunststoffzwischenschicht in Form einer in Draufsicht netzartigen, die Kunststoffplatte (11) versteifende Stegstruktur ausbilden. Die erfindungsgemässe Kunststoffplatte (11) findet bevorzugt Einsatz als Kernschicht in Sandwich-Verbunden (1).

## Beschreibung

Vorliegende Erfindung betrifft ein flächenförmiges Strukturelement enthaltend eine Mehrzahl von in einer Ebene nebeneinander angeordneten und miteinander verbundenen Körpersegmenten aus einem geschäumten Kunststoff, sowie ein Verfahren zur Herstellung eines solchen flächenförmigen Strukturelementes und die Verwendung desselben.

Es ist bekannt, Platten aus einem geschäumten thermoplastischen Kunststoff als Kernschichten in Sandwich-Verbunden einzusetzen. Die Herstellung von geschäumten Kunststoffplatten kann beispielsweise mittels eines Extrusionsverfahrens erfolgen. Die strukturelle Belastbarkeit, insbesondere die Druckfestigkeit, solcher, mittels Extrusionsverfahren hergestellter Kernschichten ist jedoch begrenzt. Sandwich-Verbunde mit den genannten Kernschichten sind daher als Strukturbauteile für anspruchsvolle Anwendungen oftmals nicht geeignet.

Für anspruchsvolle Anwendungen, wie z.B. Strukturbauteile im Transportwesen, sind jedoch Sandwich-Verbunde erforderlich, welche über ein hohes Mass an Festigkeit, insbesondere an Druckfestigkeit und Steifigkeit verfügen, und deren Kernmaterialien hohe Schubfestigkeit und -Steifigkeit aufweisen. Um diese Eigenschaften zu erreichen, werden beispielsweise stärkere und vielfach dickere Deckschichten verwendet. Dies führt in der Regel zu einer unerwünschten Erhöhung des spezifischen Gewichts der Sandwich-Verbunde. Zudem kann die Druckfestigkeit solcher Sandwich-Verbunde durch den Einsatz dickerer Deckschichten nicht beliebig erhöht werden.

Es ist daher wünschenswert, dass nicht nur die Deckschichten sondern auch die Kernschichten eine erhöhte Druck- und Schubfestigkeit und -Steifigkeit aufweisen, ohne jedoch den Vorteil der geringen Dichte von Schaumstoffkörpern aufgeben zu müssen.

Diese Massnahme würde einerseits die Herstellung von Sandwich-Verbunden mit verbesserten Festigkeits- und Steifigkeitseigenschaften ohne nennenswerte Erhöhung des spezifischen Gewichts erlauben. Andererseits würde der Einsatz von Kernschichten mit erhöhter Steifigkeit und Festigkeit auch der Einsatz von dünneren Deckschichten erlauben.

So sind Sandwich-Verbundplatten bekannt, welche durch spezifische Ausgestaltung der Kernschicht eine verbesserte Festigkeit aufweisen.

Die DE 197 15 529 C1 beschreibt beispielsweise die Herstellung eines Sandwich-Verbundes mit einer Kernschicht und beidseitig davon angeordneten Deckschichten, wobei die Kernschicht aus horizontal nebeneinander angeordneten polygonalen, z.B. würfelförmigen Schaumstoffsegmenten zusammengesetzt wird. Hierzu werden einzelne Schaumstoffsegmente mit einer Faserschicht überzogen und in einer Vorrichtung derart zusammengesetzt, dass sich die Segmentseitenflächen mit der Faserschicht stegartig berühren. Die stegartig ausgebildeten Faserschichten werden mit einem Imprägniermittel durchtränkt. Durch Aushärtung des Imprägniermittels entstehen zwischen den Schaumstoffsegmenten stegartige Faserverbundschichten, welche sich versteifend und verfestigend auf die Kernschicht auswirken.

Das genannte Herstellungsverfahren erweist sich jedoch als sehr aufwendig und teuer. Ferner ist eine nach dem beschriebenen Herstellungsverfahren produzierte Kernschicht nicht sortenrein, da mit den Schaumstoffsegmenten, Faserschichten und dem Imprägniermittel wenigstens drei unterschiedliche Materialien zum Einsatz kommen.

Aufgabe vorliegender Erfindung ist es, ein flächenförmiges, insbesondere plattenartiges Strukturelement, geeignet für Kernschichten von Sandwich-Verbundelementen vorzuschlagen, wobei das Strukturelement einen Schaumstoff mit einer geschlossenzelligen Struktur enthalten soll. Ferner umfasst die Aufgabenstellung, ein kostengünstiges Verfahren zur Herstellung des genannten flächenförmigen Strukturelementes. Das flächenförmige Strukturelement soll im Vergleich zu herkömmlichen Schaumstoffplatten insbesondere eine verbesserte Druckfestigkeit aufweisen. Das flächenförmige Strukturelement soll ferner möglichst sortenrein sein.

Erfindungsgemäss wird die Aufgabe dadurch gelöst, dass das Strukturelement vollständig aus Kunststoff ist und die Körpersegmente an ihren anstossenden Seitenflächen unter Ausbildung flächiger Schweissnähte gegenseitig verschweisst sind, wobei die flächigen Schweissnähte eine porenarme oder porenfreie Kunststoffzwischenschicht in Form einer in Draufsicht netzartigen, versteifend wirkenden Stegstruktur ausbilden.

Das flächenförmige Strukturelement ist vorzugsweise plattenförmig ausgebildet. Das flächenförmige Strukturelement liegt vorzugsweise als Plattenelement, insbesondere als quaderförmiges Plattenelement, vor.

Das erfindungsgemässe flächenförmige Strukturelement besteht vorzugsweise aus einem thermoplastischen Kunststoff, vorzugsweise aus einem Polystyrol (PS), Acrylnitril/Butadien/Styrol-Pfropfcopolymer (ABS), Polyethylen (PE), Polypropylen (PP), Polyvinylchlorid (PVC), Polycarbonat (PC) und insbesondere aus einem Polyethylenterephthalat (PET), Polyphenylenether (PPE) bzw. Polyblends davon, wie Poly(phenylenether)-Polystyrol-Polyblend (PPE+PS), oder einem Styrol/Acrylnitril-Copolymer (SAN).

Das erfindungsgemässe Strukturelement ist vorzugsweise sortenrein, d.h. es besteht vorzugsweise aus einem einzigen Kunststoff. Die Sortenreinheit bedingt insbesondere, dass das Strukturelement keine andersartigen Klebstoffe zum Verbinden der Körpersegmente enthält.

Das spezifische Gewicht eines erfindungsgemässen Strukturelementes beträgt beispielsweise mehr als 20 kg/m³, vorzugsweise mehr als 40 kg/m³ und insbesondere mehr als 50 kg/m³ und beispielsweise weniger als 200 kg/m³ und vorzugsweise weniger als 130 kg/m³ . Die Porengrösse der Schäume liegt z.B. im Bereich von 100 bis 1000 µm.

Die Schweissnähte werden vorzugsweise durch geschmolzenen und nach dem Fügevorgang wieder erhärteten Kunststoff der Körpersegmente gebildet. Die Körpersegmente weisen hierbei insbesondere an den gefügten Seitenflächen flächige Schmelz- und Wiedererhärtungszonen auf.

Die Dicke der Schweissnähte bzw. der Schmelzzonen ist derart festgelegt, dass die netzartige Stegstruktur der Schweissnähte die Druckfestigkeit des Strukturelementes bezüglich Flächendrücke erhöht. Dies bedeutet, dass die Schweissnähte nicht nur Fügestellen zwischen zwei Körpersegmenten darstellen, sondern zugleich auch Versteifungs- bzw. Verstärkungsstege zwischen zwei Körpersegmenten aus Schaumstoff sind. Ferner bewirken die Schweissnähte auch eine Versteifung des flächenförmigen Strukturelementes bezüglich Schub- und Biegebeanspruchung. Die Auslegung der Stärke bzw. Dicke der Schweissnähte erfolgt deshalb nicht nur hinsichtlich dem Kriterium einer stabilen Verbindungsnaht sondern auch hinsichtlich dem Kriterium einer wirksamen Versteifungs- bzw. Verstärkungsstruktur.

Die Dicke der Schmelz- und Wiedererhärtungszone der Seitenwandflächen, welche die Schweissnähte ausbilden ist daher derart gewählt, dass das flächenförmige Strukturelement insbesondere eine hohe Druckfestigkeit bezüglich Flächendrücke aufweist.

Die Körpersegmente sind vorzugsweise lückenlos, d.h. ohne Lunkerbildung, aneinander gefügt und verschweisst. Die Körpersegmente weisen daher bevorzugt einen Formquerschnitt auf, welcher ein lückenloses Aneinanderfügen der Körpersegmente ermöglicht.

Die Körpersegmente können in einer nicht beanspruchten Ausführung auch unter Verwendung eines Klebers zu einem flächenförmigen Strukturelement aneinander gefügt bzw. aneinander geklebt sein.

Die Körpersegmente weisen ein einer bevorzugten Ausführung der Erfindung in Draufsicht des flächenförmigen Strukturelementes eine polygonale Form, insbesondere eine acht-, sechs-, vier- oder dreieckige Form auf. Die Körpersegmente können in Draufsicht des Strukturelementes z.B. einen quadratischen, rechteckigen, hexagonalen oder dreieckigen Umriss, welcher die sogenannten Deckflächen der Körpersegmente umreisst, aufweisen.

Die Grösse der Körpersegmente kann je nach der zu erreichenden Steifigkeit bzw. Druckfestigkeit des Strukturelementes variieren.

Da jede der vorgenannten Geometrien sowie Grössen der Körpersegmente zu flächenförmigen Strukturelementen mit unterschiedlichen Eigenschaften führt, wird die Geometrie und Grösse der Körpersegmente primär aufgrund der spezifischen Anforderungen an das Strukturelement bestimmt.

Die Körpersegmente liegen besonders bevorzugt in Form von Würfel oder Quader vor. Körpersegmente in Quader- oder Würfelform können z.B. in mehreren Reihen und Kolonnen angeordnet sein, wobei die Schweissverbindungen eine Gitternetzstruktur mit sich kreuzenden Längs- und Querschweissnähten ausbilden. Die besagten Körpersegmente können auch in mehreren zueinander versetzten Reihen angeordnet sein, wobei die Schweissverbindungen durchgehende Querschweissnähte und zueinander versetzte Längsschweissnähte in der Art einer Ziegelsteinmauer ausbilden.

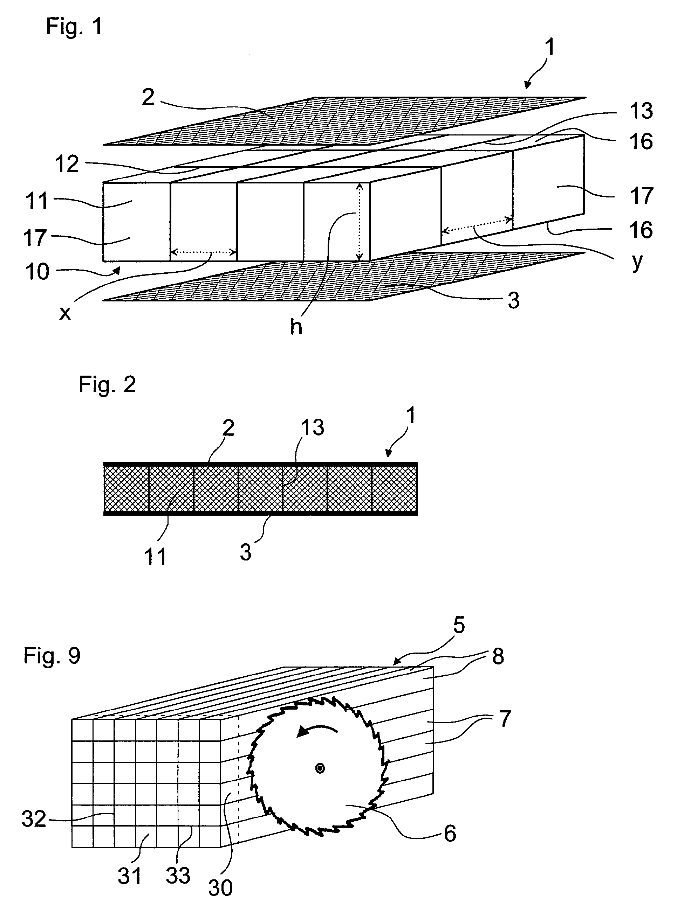

In Quaderform vorliegende Körpersegmente können z.B. (in Draufsicht des Strukturelementes) einen quadratischen oder rechteckigen Grundriss mit Seitenlängen (x, y) von 20 bis 600 mm, vorzugsweise von 30 bis 400 mm, insbesondere von 30 bis 300 mm, und und eine Höhe h von 30 bis 200 mm, insbesondere von 40 bis 100 mm aufweisen (siehe auch Fig. 1). Ein rechteckförmiges Körpersegment kann z.B. eine (in Draufsicht des Strukturelementes) Länge von 100 bis 250 mm und eine Breite von 30 bis 50 mm aufweisen.

Die Körpersegmente können in Draufsicht des flächenförmigen Strukturelementes ferner auch einen kurvenförmigen, z.B. einen konkaven oder konvexen, Umriss oder Umrissabschnitte aufweisen. Die Körpersegmente können ferner auch verbundsteinartig ausgebildet sein, d.h. die Körpersegmente sind derart geformt, dass sich die einzelnen Körpersegmente fest ineinanderfügen. Die Körpersegmente einer erfindungsgemässen Strukturelementes sind ferner bevorzugt zueinander kongruent.

Die Seitenflächen der Körpersegmente liegen überdies bei plattenförmigen Strukturelementen bevorzugt senkrecht zu den Deckflächen.

Die Erfindung betrifft im weiteren ein Verfahren zur Herstellung eines flächenförmigen Strukturelementes, enthaltend eine Mehrzahl von in einer Ebene nebeneinander angeordneten und miteinander verbundenen Körpersegmenten aus einem geschäumten Kunststoff.

Das Verfahren zeichnet sich durch folgende Schritte aus:
a. Herstellung von geschlossenzelligen stab- oder säulenförmigen Schaumstoffkörpern;
b. längsseitiges Zusammenschweissen der stab- oder säulenförmigen Schaumstoffkörper zu einem Schaumstoffblock unter Ausbildung flächiger Schweissnähte, wobei die flächigen Schweissnähte als porenarme oder porenfreie Kunststoffzwischenschichten vorliegen;
c. Aufteilung des Schaumstoffblockes in einzelne flächenförmige Strukturelemente, insbesondere Schaumstoffplatten, quer bzw. senkrecht zur Längsrichtung der stabförmigen Schaumstoffkörper,
wobei die flächigen Schweissnähte in Draufsicht des flächenförmigen Strukturelementes eine netzartige Stegstruktur ausbilden.

Die stab- oder säulenförmigen Schaumstoffkörper werden vorzugsweise mittels eines Extrusionsprozesses hergestellt. Die Schaumstoffkörper bzw. Körpersegmente weisen bevorzugt eine in Extrusionsrichtung verstreckte Orientierung des Materials auf. Dabei weisen insbesondere Polymerketten eine durch die Extrusion erfahrene Verstreckung in Extrusionsrichtung auf. Die Materialverstreckung bewirkt eine Verbesserung der mechanischen Eigenschaften, insbesondere der Druckfestigkeit, in Verstreckungsrichtung.

Die Schaumstoffkörper bzw. Körpersegmente weisen ferner bevorzugt eine in Extrusionsrichtung orientierte Zellenstruktur bzw. Zellenanordnung auf. Die orientierten Zellenstrukturen des Schaumstoffkörpers tragen hierbei zu einer Erhöhung der Druckfestigkeit des Strukturelementes bei.

In einer weiteren Ausführung der Erfindung können die stab- bzw. säulenförmigen Schaumstoffkörper aus einem vorgefertigten Schaumstoffblock gewonnen, d.h. geschnitten oder gesägt werden. Der genannte Schaumstoffblock wird dabei bevorzugt mittels eines Extrusionsverfahrens hergestellt.

Die Schaumstoffkörper können mittels physikalischen oder chemischen Treibmitteln hergestellt werden. In bevorzugter Ausführung werden die Schaumstoffkörper, insbesondere durch ein Extrusionsverfahren hergestellte Schaumstoffkörper, mittels CO₂ physikalisch geschäumt. Die Zufuhr des Treibmittels kann hierbei direkt in die Extrusionsvorrichtung erfolgen.

In einer bevorzugten Ausführung der Erfindung werden die extrudierten Schaumstoffkörper längsseitig, d.h. entlang ihrer berührenden Längsseiten zu Kunststoffblöcken verschweisst. Aus diesen Kunststoffblöcken werden nachfolgend quer bzw. senkrecht zu den Längsseiten der Schaumstoffkörper flächenförmige, insbesondere plattenförmige, Strukturelemente geschnitten.

Das Schneiden der flächenförmigen Strukturelemente aus den Kunststoffblöcken kann mittels Sägen oder mittels eines thermischen Schneidprozesses geschehen.

In Abweichung zu den vorgenannten Verfahrensschritten können die Schaumstoffkörper auch bereits vorab in Körpersegmente zurecht geschnitten werden, wobei die einzelnen Körpersegmente nachfolgend zu flächenförmigen Strukturelementen zusammengeschweisst werden.

Die Schweissverbindung erfolgt vorzugsweise durch flächiges Anschmelzen der zu verbindenden Seitenflächen der Körpersegmente und nachfolgendes zusammenfügen derselben und Aushärten der Schmelzzonen.

In einer bevorzugten Ausführungsvariante sind Mittel zur Steuerung des Anmschmelzvorganges während des Schweissens vorgesehen, welche die Herstellung von Schweissnähten von einer bestimmten Dicke bzw. Dickenbereich erlauben, wobei der Dickenbereich derart gewählt wird, dass die netzartige Stegstruktur der Schweissnähte eine versteifende Wirkung auf die Kunststoffplatte ausübt.

Der Schweissvorgang ist zweckmässig ein thermoplastisches Schweissen. Die Herstellung der Schweissverbindung kann mittels Strahlungsschweissen oder Kontaktschweissen geschehen. Anwendbare Kunststoffschweissverfahren sind z.B. Heizelementschweissen oder Infrarot-Schweissen. Der Schweissvorgang kann ohne oder mit Zusatzstoffen erfolgen.

Die erfindungsgemässen flächenförmigen Strukturelemente weisen gegenüber herkömmlichen geschäumten Kunststoffplatten eine höhere Steifigkeit und insbesondere eine höhere Druckfestigkeit auf. Diese Eigenschaften werden im wesentlichen durch die Schweissnähte zwischen den einzelnen Körpersegmenten begründet. Die Schweissnähte bilden ein Netzwerk von stegartigen Verbindungen in der Art eines Gerüstes, wobei die Schweissnähte in Form von porenarmen bzw. porenfreien, dichten Kunststoffzwischenschichten vorliegen.

Das Gerüst der stegartigen Verbindungen der Schweissnähte erhöht die Druckfestigkeit, da die Stege der Kunststoffzwischenschicht wesentlich weniger kompressibel sind als die Schaumstoffkörper selber. Wird beispielsweise auf das erfindungsgemässe Strukturelement ein Flächendruck ausgeübt (z.B. bei einem Sandwich-Verbund ein Flächendruck über die Deckschichten auf das Strukturelement in Funktion als Kernschicht), so wirken die Druckkräfte primär auf die steife Stegstruktur und nicht auf den Schaumstoffkörper selbst.

Die Erhöhung der Steifigkeit erfindungsgemässer Strukturelemente resultiert ebenfalls aus der gerüstartig aufgebauten Struktur der Schweissnähte, welche zu einer erhöhten Verwindungs-und Biegesteifigkeit des Strukturelementes führen.

Das erfindungsgemässe Strukturelement findet bevorzugt Verwendung in Verbundelementen, insbesondere Verbundplatten, mit wenigstens einer auf einer Seite des Strukturelementes angeordneten Deckschicht.

Besonders bevorzugt findet die erfindungsgemässe Strukturelemente Verwendung als Kernschicht in Sandwich-Verbundelementen, insbesondere Sandwich-Verbundplatten, mit beidseitig der Kernschicht angeordneten Deckschichten. Die Sandwich-Verbundelemente können z.B. aus einem erfindungsgemässen flächenförmigen Strukturelement mit je einer beidseitig des Strukturelementes angeordneten Deckschicht bestehen. Ferner können auf einer oder beiden Seiten des Strukturelementes auch mehrere Schichten angeordnet sein. Wird das erfindungsgemässe Strukturelement als Kernschicht in einer Sandwich-Verbundplatte verwendet, so ist das Strukturelement zweckmässig ein Plattenelement.

Die besagten Schichten bzw. Deckschichten können beispielsweise mittels einer Klebverbindung gegenseitig und/oder mit der Kernschicht verbunden sein.

Die Deckschichten können z.B. starre oder biegsame Platten aus Kunststoff oder faserverstärktem Kunststoff, wie glasfaserverstärktem Kunststoff, sein. Ferner können die Deckschichten auch Platten bzw. Bleche aus Metall, insbesondere aus Aluminium oder einer Aluminiumlegierung sein. Die Deckschichten sind im Vergleich zur Kernschicht vorzugsweise verhältnismässig dünne Platten.

Sandwich-Verbundelemente mit erfindungsgemässen Strukturelementen als Kernschicht weisen trotz ihres geringen Gewichtes eine hohe Steifigkeit und eine ausgezeichnete Schub- und Druckfestigkeit auf. Solche Sandwich-Strukturen eignen sich deshalb insbesondere für Anwendungen, welche leichte jedoch strukturell hoch belastbare Komponenten erfordern.

Sandwich-Verbundelemente mit erfindungsgemässen Strukturelementen als Kernschicht können z.B. als Konstruktionselemente im Bauwesen eingesetzt werden. Beispiele für solche Konstruktionselemente sind Wände, Böden, Decken, Türen, Zwischenwände, Trennwände oder Verkleidungselemente.

Sandwich-Verbundelemente mit erfindungsgemässen Strukturelementen als Kernschicht finden ferner bevorzugt Einsatz im Transportwesen zu Land (z.B. Strassen- oder Schienenfahrzeugbau), zu Wasser (z.B. Schiff- oder Bootsbau, Wassersportgerätebau) oder in der Luft (z.B. Flugzeugbau). Dies können z.B. Sandwich-Verbundelemente gemäss Erfindung für Kofferaufbauten, Ladebrücken, Wände, Decken, Türen, Deckel, Verkleidungen oder Teile davon, auf oder an Lastkraftwagen oder Eisenbahnwagen zum Gütertransport oder Wände, Decken, Böden, Zwischenwände, Verkleidungselemente, Türen, Deckel oder Teile davon, an Fahrzeugen zum Personentransport, wie Omnibussen, Strassenbahnen, Eisenbahnwagen oder auf Schiffen, wie Passagierschiffen, Fähren, Ausflugsdampfern oder -booten sein.

Die erfindungsgemässen Sandwich-Verbundelemente können auch in Sportartikeln für den Einsatz zu Land, im Wasser oder in der Luft Verwendung finden.

Besonders bevorzugt finden die Sandwich-Verbundelemente mit erfindungsgemässen Strukturelementen als Kernschicht Einsatz als Windflügel bzw. Rotorblätter für Windkraftanlagen.

Im folgenden wird die Erfindung beispielhaft und mit Bezug auf die beiliegenden Zeichnungen näher erläutert. Es zeigen:
- Fig. 1:: eine Explosionsdarstellung eines Sandwich-Verbundes mit einem erfindungsgemässen Strukturelement als Kernschicht;
- Fig. 2:: einen Querschnitt durch einen Sandwich-Verbund mit einem erfindungsgemässen Strukturelement als Kernschicht;
- Fig.3:: Draufsicht eines erfindungsgemässen Strukturelementes einer ersten Ausführungsart;
- Fig. 4:: Draufsicht eines erfindungsgemässen Strukturelementes einer zweiten Ausführungsart;
- Fig. 5:: Draufsicht eines erfindungsgemässen Strukturelementes einer dritten Ausführungsart;
- Fig. 6:: Draufsicht eines erfindungsgemässen Strukturelementes einer vierten Ausführungsart;
- Fig. 7:: Draufsicht eines erfindungsgemässen Strukturelementes einer fünften Ausführungsart;
- Fig. 8:: Draufsicht eines erfindungsgemässen Strukturelementes einer sechsten Ausführungsart;
- Fig. 9:: Perspektivische Darstellung eines Kunststoffblockes zur Herstellung von erfindungsgemässen Strukturelementen gemäss Fig. 5.

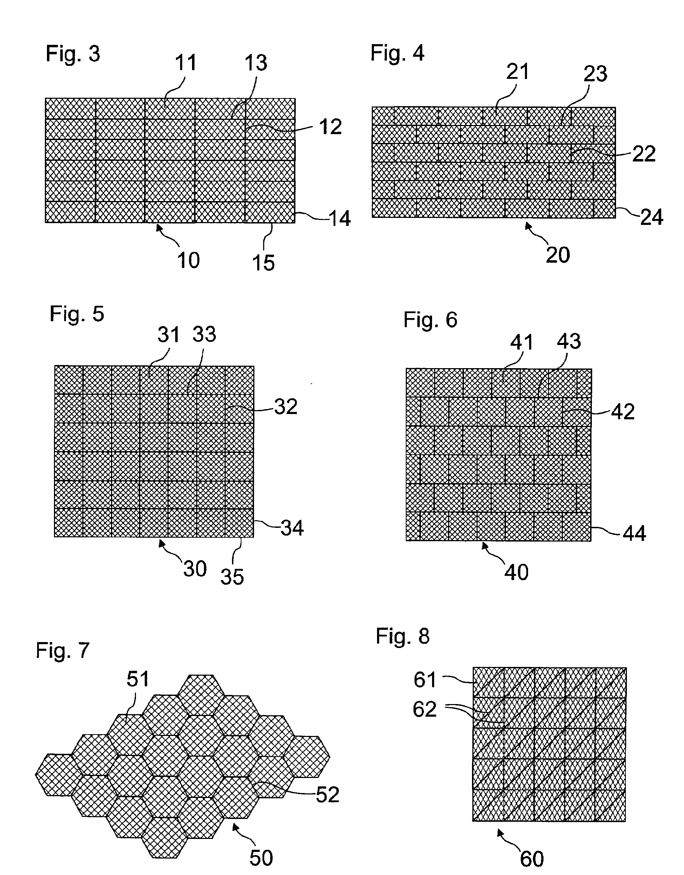

Fig. 1 zeigt ein Sandwich-Verbundelement 1 mit einer Kernschicht aus einem erfindungsgemässen Strukturelement, welches als Kunststoffplatte 10 ausgebildet ist (vgl. auch Fig. 3). Die Kunststoffplatte 10 besteht aus quaderförmigen Körpersegmenten 11, welche über Längs- 12 und Querschweissnähte 13 ausbildende, flächigen Schweissverbindungen an ihren berührenden Seitenflächen 17 miteinander verbunden sind. Die Schweissnähte 12, 13 bilden hierbei (in Platten-Draufsicht) eine netzartige, steife Stegstruktur aus. Beidseits der Kernschicht, auf den Deckflächen 16 der Körpersegmente 11, ist jeweils eine Deckschicht 2, 3 angeordnet. Die Deckschichten 2, 3 können aus Kunststoffplatten, faserverstärkten Kunststoffplatten (z.B. Glasfaserverstärkte Duro- oder Thermoplaste) oder Metallblechen, insbesondere Aluminiumblechen, bestehen.

Fig. 2 zeigt ein Sandwich-Verbundelement 1 gemäss Fig. 1 in Querschnittsansicht. Die Deckschichten 2, 3 sind mittels Klebverbindung mit der Kernschicht verbunden.

Fig. 3 bis 7 zeigen verschiedene Ausführungsformen von erfindungsgemässen Strukturelementen in Form von Kunststoffplatten 10, 20, 30, 40, 50, 60 aus nebeneinander liegend angeordneten Körpersegmenten 11, 21, 31, 41, 51, 61 verschiedener Geometrien und Anordnung.

Die Kunststoffplatten 10, 20 gemäss Fig. 3 und 4 enthalten Körpersegmente 11, 21 mit in Plattendraufsicht rechteckigem Querschnitt. Die Körpersegmente 11 gemäss Fig. 3 sind in mehreren Reihen 14 und Kolonnen 15 nebeneinander in einer Ebene angeordnet, wobei die Schweissverbindungen zwischen den Körpersegmenten 11 eine Gitternetzstruktur aus sich kreuzenden Längs- 12 und Querschweissnähten 13 ausbilden.

Die Körpersegmente 21 gemäss Fig. 4 sind in mehreren zueinander versetzten Reihen 24 nebeneinander und in einer Ebene angeordnet, wobei die Schweissverbindungen eine ziegelsteinmauerartige Struktur mit durchgehenden Querschweissnähten 23 und zueinander versetzten Längsschweissnähten 22 ausbilden.

Die Kunststoffplatten 30, 40 gemäss Fig. 5 und 6 enthalten Körpersegmente 31, 41 mit in Plattendraufsicht quadratischem Querschnitt. Die Körpersegmente 31 gemäss Fig. 5 sind in mehreren Reihen 34 und Kolonnen 35 nebeneinander und in einer Ebene angeordnet, wobei die Schweissverbindungen eine Gitternetzstruktur mit sich kreuzenden Längs- 32 und Querschweissnähten 33 ausbilden.

Die Körpersegmente 41 gemäss Fig. 6 sind in mehreren zueinander versetzten Reihen 44 nebeneinander und in einer Ebene angeordnet, wobei die Schweissverbindungen durchgehende Querschweissnähte 43 und zueinander versetzte Längsschweissnähte 42 ausbilden.

Fig. 7 zeigt eine weitere Ausführung einer erfindungsgemässen Kunststoffplatte 50 mit in Plattendraufsicht hexagonalen, d.h. wabenförmigen, Körpersegmenten 51, welche nebeneinander und in einer Ebene angeordnet und unter Ausbildung von Schweissnähten 52 gegenseitig verschweisst sind.

Fig. 8 zeigt eine weitere Ausführung einer erfindungsgemässen Kunststoffplatte 60 mit in Plattendraufsicht dreieckigen Körpersegmenten 61, welche nebeneinander und in einer Ebene angeordnet und unter Ausbildung von Schweissnähten 62 gegenseitig verschweisst sind.

Fig. 9 zeigt einen aus säulen- bzw. stabförmigen Schaumstoffkörpern 7 gebildeten Kunststoffblock 5, wobei die Schaumstoffkörper 7 z.B. mittels Extrusion oder durch Aufteilung eines homogenen Schaumstoffblockes hergestellt sind. Die einzelnen Schaumstoffkörper 7 sind erfindungsgemäss mittels Kunststoffschweissen unter Ausbildung von Längs- 32 und Querschweissnähten 33 entlang ihrer Längsseiten 8 miteinander verbunden. Durch Zersägen 6 oder thermisches Schneiden wird der Kunststoffblock 5 in einzelne erfindungsgemässe Kunststoffplatten 30 gemäss Fig. 5 zu einzelnen Kunststoffplatten 30 aufgeteilt, wobei sich die Kunststoffplatten 30 aus in einer Ebene nebeneinander angeordneten Körpersegmenten 31 zusammensetzen.

## Patentansprüche

1. Flächenförmiges Strukturelement (10) enthaltend eine Mehrzahl von in einer Ebene nebeneinander angeordneten und miteinander verbundenen Körpersegmenten (11 ) aus einem geschäumten Kunststoff,
**dadurch gekennzeichnet, dass**
das Strukturelement (10) vollständig aus Kunststoff ist und die Körpersegmente (11) an ihren anstossenden Seitenflächen unter Ausbildung flächiger Schweissnähte (12, 13) gegenseitig verschweisst sind, wobei die flächigen Schweissnähte (12, 13) eine porenarme oder porenfreie Kunststoffzwischenschicht in Form einer in Draufsicht netzartigen, versteifend wirkenden Stegstruktur ausbilden.

2. Flächenförmiges Strukturelement nach Anspruch 1, wobei die Körpersegmente aus einem geschlossenzelligen Schaumstoff bestehen.

3. Flächenförmiges Strukturelement nach einem der Ansprüche 1 bis 2, wobei das flächenförmige Strukturelement (10) aus einem thermoplastischen Kunststoff, vorzugsweise aus einem Polyethylenterephthalat (PET) oder einem Styrol/Acrylnitril-Copolymer (SAN), besteht.

4. Flächenförmiges Strukturelement nach einem der Ansprüche 1 bis 3, wobei die Schweissnähte (12, 13) aus aufgeschmolzenem Kunststoff der Körpersegmente (11 ) gebildet sind.

5. Flächenförmiges Strukturelement nach einem der Ansprüche 1 bis 4, wobei die Dicke der Schweissnähte (12, 13) derart festgelegt ist, dass die netzartige Stegstruktur der Schweissnähte die Druckfestigkeit des Strukturelementes (10) bezüglich Flächendrücke erhöht.

6. Flächenförmiges Strukturelement nach einem der Ansprüche 1 bis 5, wobei die Körpersegmente (11 ) Zuschnitte aus stab- oder säulenförmigen Schaumstoffkörpern (7) sind.

7. Flächenförmiges Strukturelement nach Anspruch 6, wobei die stab- oder säulenförmigen Schaumstoffkörper (7) mittels Extrusion hergestellt sind, und die Extrusionsrichtung in den aus den Schaumstoffkörpern (7) hergestellten Körpersegmenten (11) parallel oder im wesentlichen parallel zur Schnittlinie zweier sich kreuzenden Schweissnahtflächen (12, 13) liegt.

8. Flächenförmiges Strukturelement nach Anspruch 7, wobei die Körpersegmente (11) eine in Extrusionsrichtung orientierte Verstreckung der Polymerstruktur aufweisen.

9. Flächenförmiges Strukturelement nach einem der Ansprüche 1 bis 8, wobei die Körpersegmente (11) lückenlos aneinandergefügt sind, und die Körpersegmente (11) einen Formquerschnitt aufweisen, welcher ein lückenloses Aneinanderfügen der Körpersegmente ermöglicht.

10. Flächenförmiges Strukturelement nach einem der Ansprüche 1 bis 9, wobei die Körpersegmente (11 ) in Draufsicht des flächenförmigen Strukturelementes (10) eine polygonale Form und vorzugsweise eine acht-, sechs-, vier- oder dreieckige Form aufweisen.

11. Flächenförmiges Strukturelement nach einem der Ansprüche 1 bis 9, wobei das flächenförmige Strukturelement (10) eine Kunststoffplatte ist.

12. Verfahren zur Herstellung eines flächenförmigen Strukturelementes (10), enthaltend eine Mehrzahl von in einer Ebene nebeneinander angeordneten und miteinander verbundenen Körpersegmenten (11) aus einem geschäumten Kunststoff nach Anspruch 1,
**gekennzeichnet durch** folgende Schritte:
a. Herstellung von geschlossenzelligen stab- oder säulenförmigen Schaumstoffkörpern (7);
b. längsseitiges Zusammenschweissen der stab- oder säulenförmigen Schaumstoffkörper (7) zu einem Schaumstoffblock (5) unter Ausbildung flächiger Schweissnähte (32, 33), wobei die flächigen Schweissnähte (32, 33) als porenarme oder porenfreie Kunststoffzwischenschichten vorliegen;
c. Aufteilung des Schaumstoffblockes (5) in einzelne flächenförmige Strukturelemente (30), insbesondere Schaumstoffplatten, quer zur Längsrichtung der stabförmigen Schaumstoffkörper (7),
wobei die flächigen Schweissnähte (32, 33) in Draufsicht des flächenförmigen Strukturelementes (30) eine netzartige Stegstruktur ausbilden.

13. Verfahren nach Anspruch 12, wobei die stab- oder säulenförmigen Schaumstoffkörper (7) mittels eines Extrusionsprozesses hergestellt werden.

14. Verfahren nach Anspruch 13, wobei die stab- oder säulenförmigen Schaumstoffkörper (7) mit einer in Extrusionsrichtung verstreckten Polymerkettenstruktur hergestellt werden.

15. Verfahren nach einem der Ansprüche 12 bis 14, wobei die Schweissverbindung durch flächiges Anschmelzen der zu verbindenden Seitenflächen der Körpersegmente (11) und nachfolgendes Zusammenfügen und Wiedererhärten derselben erfolgt.

16. Verfahren nach Anspruch 15, wobei Mittel zur Steuerung des Anmschmelzvorganges während des Schweissens vorgesehen sind, welche die Herstellung von Schweissnähten (12, 13) eines bestimmten Dickenbereichs erlauben, und wobei der Dickenbereich derart gewählt wird, dass die netzartige Stegstruktur der Schweissnähte (12, 13) die Druckfestigkeit des Strukturelementes (10) bezüglich Flächendrücke erhöht.

17. Verfahren nach einem der Ansprüche 12 bis 16, wobei das flächenförmige Strukturelement (10) aus einem thermoplastischen Kunststoff besteht und das Schweissen der Körpersegmente (11 ) ein thermoplastisches Schweissen ist.

18. Verwendung des flächenförmigen Strukturelementes (10) nach einem der Ansprüche 1 bis 11 in einem Strukturbauteil (1) mit einer wenigstens auf einer Oberfläche des flächenförmigen Strukturelementes (10) aufgebrachten Deckschicht (2).

19. Verwendung des flächenförmigen Strukturelementes (10) nach Anspruch 18 als Kernschicht in einem Strukturbauteil (1), wobei das Strukturbauteil (1) ein Sandwich-Verbundelement, insbesondere eine Sandwich-Verbundplatte, mit beidseitig der Kernschicht angeordneten Deckschichten (2, 3) ist.

20. Verwendung des Sandwich-Verbundelementes (1 ) nach Anspruch 19 zur Herstellung von Windflügeln in Windkraftanlagen.
